Europäisches Patentamt

European Patent Office

Office européen des brevets

(19)

(11) Publication number: **0 127 448**
**B1**

(12) EUROPEAN PATENT SPECIFICATION

(45) Date of publication of patent specification: 11.11.87

(51) Int. Cl.⁴: **G 11 B 7/12**

(21) Application number: 84303523.9

(22) Date of filing: 24.05.84

(54) Focussing error detecting apparatus.

(30) Priority: 31.05.83 JP 96058/83

(43) Date of publication of application:
05.12.84 Bulletin 84/49

(45) Publication of the grant of the patent:
11.11.87 Bulletin 87/46

(84) Designated Contracting States:
AT DE FR GB IT NL SE

(56) References cited:
EP-A-0 056 920
EP-A-0 121 989
DE-A-2 621 319
GB-A-1 530 812
US-A-4 293 944
US-A-4 410 969

(73) Proprietor: SONY CORPORATION
7-35 Kitashinagawa 6-Chome Shinagawa-ku
Tokyo 141 (JP)

(72) Inventor: Ohsato, Kiyoshi
Patent Division Sony Corp.
7-35 Kitashinagawa-6
Shinagawa-ku Tokyo (JP)
Inventor: Kubota, Shigeo
Patent Division, Sony Corp.
7-35 Kitashinagawa-6
Shinagawa-ku Tokyo (JP)

(74) Representative: Thomas, Christopher Hugo
et al
D Young & Co 10 Staple Inn
London WC1V 7RD (GB)

## Description

This invention relates to focussing error detecting apparatus. Such apparatus may be used, for example, in disc reproducing apparatus and auto-focus cameras.

Attention is drawn to our European patent specification EP—0 121 989 published on 5 December 1984, and thus comprised in the state of the art according to EPC Article 54(3).

Various focussing error detectors have been previously proposed for optical disc reproducing apparatus, and some will now be described with reference to Figures 1 to 34 of the accompanying drawings, throughout which like parts are referred to by like references. In these drawings:

Figure 1 is a diagram schematically showing the arrangement of a previously proposed focussing error detecting apparatus;

Figure 2 is a perspective view of a prism used therein;

Figure 3 is a diagram for explaining the operation of the apparatus of Figure 1 in each focussed state thereof;

Figure 4 is a diagram schematically showing the arrangement of another previously proposed focussing error detecting apparatus;

Figure 5 is a side and front view of a lens used therein;

Figure 6 is a diagram showing the arrangement of a photo-detector used therein;

Figure 7 is a diagram for explaining the operation of the apparatus of Figure 4 in each focussed state;

Figure 8 is a graph for explaining the apparatus of Figure 4;

Figure 9 is a perspective view of a semicylindrical lens used in still another previously proposed focussing error detecting apparatus;

Figure 10 is a perspective view illustrating a beam spot on the lens in Figure 9;

Figure 11 is a diagram showing a locus of a light ray incident on the semicylindrical lens in Figure 9;

Figures 12 to 14 are respectively diagrams showing beam spots formed by the lens in Figure 9;

Figure 15 is a diagram schematically showing an example of our focussing error detecting apparatus proposed in EP—A1—0121989;

Figure 16 is a plan view of a composite lens used in the apparatus of Figure 15;

Figure 17 is a plan view of a photo-detector used in the apparatus of Figure 15;

Figure 18 is a diagram showing a positional relation of the composite lens and photo-detector of the apparatus of Figure 15;

Figures 19 and 20 are graphs for explaining the apparatus of Figure 15;

Figure 21 is a diagram schematically showing another example of our previously proposed focussing error detecting apparatus;

Figure 22 is a plan view of a composite lens used in the apparatus of Figure 21;

Figure 23 is a plan view of a photo-detector used in the apparatus of Figure 15;

Figure 24 is a diagram showing a positional relation between the composite lens and the photo-detector in the apparatus of Figure 21;

Figurs 25 to 28 are cross-sectional diagrams of examples of composite lenses used in our previously proposed focussing error detecting apparatus;

Figures 29 to 31 are plan views of examples of composite lenses used in our previously proposed focussing error detecting apparatus;

Figures 32 and 33 are plan views of examples of photo-detectors used in our previously proposed focussing error detecting apparatus; and

Figure 34 is a diagram showing the optical system for explaining the function of the lens used in our previously proposed focussing error detecting apparatus.

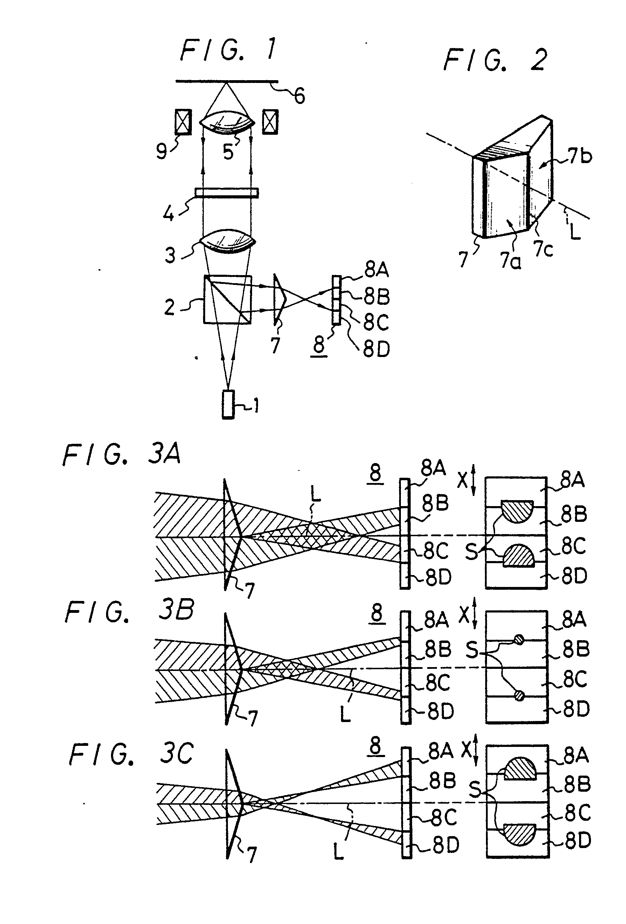

One such type having a simple optical system for detecting a focussing error is the combination of a Foucault prism and a photo-detector having four photo-sensors arranged in line as shown in Figure 1 of the accompanying drawings.

Laser light from a laser light source (for example, a semiconductor laser source) 1 is made incident through a polarized beam splitter 2, a collimator lens 3, a quarter wave plate 4 and an objective lens 5 in turn onto a recorded surface 6 of a disc. On the recorded surface 6 are recorded pits that are modulated by audio or video information along a spiral track so as to be optically readable. The laser light reflected from the recorded surface 6 is made incident on the photo-detector 8 through the objective lens 5, the quarter wave plate 4, the collimator lens 3, the polarized beam splitter 2 and a prism 7 in turn.

The prism 7 has two rectangular refractive surfaces 7a and 7b making an obtuse angle as shown in Figure 2 of the accompanying drawings. The prism 7 is arranged so that light emerges from the refractive surfaces 7a and 7b, and so that the edge line 7c where the refractive surfaces 7a and 7b meet crosses the optical axis L perpendicularly. The photo-detector 8, as shown in Figure 3 of the accompanying drawings, comprises four photosensors 8A, 8B, 8C and 8D, the photo-detecting surfaces of which lie in a plane perpendicular to the optical axis L and which are arranged in a row in the X-direction perpendicular to both the optical axis L and the edge line 7c. In addition, the four photo-sensors 8A to 8D are disposed at an appropriate position along the optical axis L and in the X direction. The photo-detector 8 produces a difference signal, $(S_A + S_D) - (S_B + S_C)$ between the sum signal, $S_A + S_D$ of the photo-detected signals $S_A$

and $S_D$ from the outer sensors 8A and 8D and the sum signal, $S_B + S_C$ of the photo-detected signals $S_B$ and $S_C$ from the inner sensors 8B and 8C, as a focussing error signal.

The objective lens 5 is moved in the optical axis direction by the current flowing through a control coil 9, and the focussing error signal is supplied to the control coil 9 as a focussing control signal.

In this apparatus, when the recorded surface 6 of the disc is properly positioned relative to the objective lens 5 to achieve the just focussed state, the spot S on the photo-detector 8 appears as dots on the boundaries between the sensors 8A and 8B and between the sensors 8C and 8D as shown in Figure 3B. Accordingly, in this case, the focussing error signal becomes zero and the objective lens 5 is kept at the same position.

When the recorded surface 6 of the disc becomes nearer to the objective lens 5 to cause the under-focussed state, the spot S on the photo-detector 8 appears as semicircles on the inner sensors 8B and 8C. Accordingly, in this case, the focussing error signal becomes negative, and thus the objective lens 5 is moved away from the recorded surface 6.

On the contrary, when the recorded surface 6 of the disc is positioned distant from the objective lens 5 to cause the over-focussed state, the spot S on the photo-detector 8 appears as semicircles on the outer sensors 8A and 8D as shown in Figure 3C. Accordingly, in this case, the focussing error signal becomes positive and thus the objective lens 5 is moved towards the recorded surface 6.

As described above, the prism 7 and the photo-detector 8 having four photo-sensors 8A to 8D arranged in line are combined to detect the focussing errors, namely, the distance between the disc and the objective lens 5. This error signal is then supplied to the control coil 9 as the focus control signal automatically to control the objective lens 5 always to achieve the just focussed state, or always to be at a constant distance from the disc.

However, this previously proposed apparatus has the disadvantage that the photo-detector 8 must be disposed at the correct position relative to the optical axis L direction and to the X-direction so as to receive the spot S on the photo-detector 8 in each of the focussing states shown in Figures 3A to 3C. Thus the photo-detector 8 needs to be very precisely adjusted in position. Moreover, a substantial amount of light is lost at the apex of the prism 7 which forms the edge line 7c. In order to reduce this loss of light, it is necessary for the apex to be finished with very high precision.

Another previously proposed focussing error detecting apparatus with the above defects obviated will be described next.

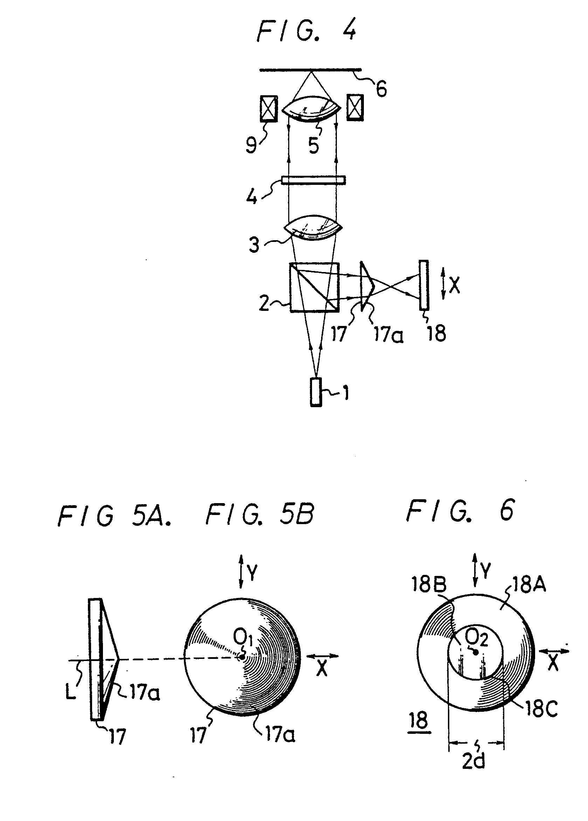

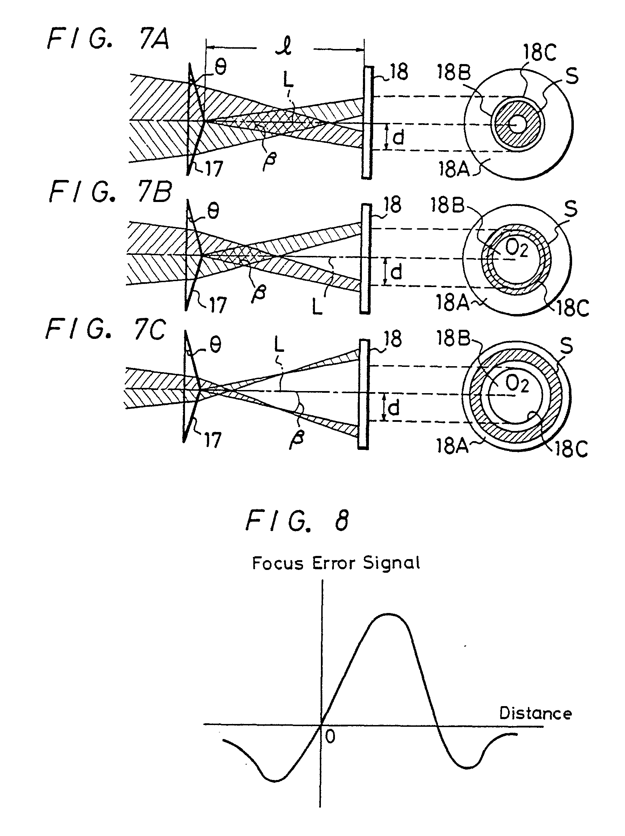

Figure 4 of the accompanying drawings shows an example of such apparatus which uses a lens with a conical refractive surface instead of the above prism 7. On the optical path from the polarized beam splitter 2 to a photo-detector 18, which may for example be a PIN photo-diode, is disposed a lens 17 having a conical refractive surface 17a with its refractive surface 17a at the light emerging side. In this case, as shown in Figure 5 of the accompanying drawings, the lens 17 is positioned with its centre $O_1$ lying on the optical axis L. Moreover, as shown in Figure 6 of the accompanying drawings, the photo-detector 18 is formed of two concentric photo-sensors 18A and 18B, and is positioned with the centre $O_2$ of the concentric circles lying on the optical axis L. In this case, as shown in Figure 7 of the accompanying drawings, if the basic angle of the lens 17 is taken as $\theta$ and the radius of the dead zone (separating zone) between the sensors 18A and 18B of the photo-detector 18 is taken as d, the distance, l between the lens 17 and the photo-detector 18 is so selected as to satisfy $l = d \cot \beta$, so the light passing through the lens 17 quite close to the optical axis L reaches the dead zone 18C between the elements 18A and 18B. In this expression, $\beta$ is the angle given by $\sin(\beta + \theta) = n \sin \theta$, and n is the refractive index of the glass forming the lens 17. Then, the difference signal $S_A - S_B$ between the photo-detected signals $S_A$ and $S_B$ from the sensors 18A and 18B is generated as a focussing error signal, and this error signal is supplied to the control coil 9 as the focussing control signal.

In this apparatus, when the recorded surface 6 of the disc is at the correct position relative to the objective lens 5 to achieve the just focussed state, as shown in Figure 7B, the spot S on the photo-detector 18 appears as an annular shape on the dead zone 18C between the sensors 18A and 18B. Accordingly, in this case, the focussing error signal becomes zero so that the objective lens 5 is kept at the same position.

When the recorded surface 6 of the disc is at a position closer to the objective lens 5 causing the under-focussed state, as shown in Figure 7A the spot S on the photo-detector 18 appears as an annular shape on the inner sensor 18B. Accordingly, in this case, the focussing error signal becomes negative, thus controlling the objective lens 5 to move away from the recorded surface 6.

On the contrary, when the recorded surface 6 of the disc is positioned distant from the objective lens 5 to cause the over-focussed state, as shown in Figure 7C the spot S on the photo-detector 18 appears as an annular shape on the outer sensor 18A. Accordingly, in this case, the focussing error signal becomes positive, thus controlling the objective lens 5 to move towards the recorded surface 6.

As described above, the lens 17 having the conical refractive surface 17a and the photo-detector 18 formed of two concentric photo-sensors 18A and 18B are combined to detect the focussed state, or the distance between the disc and the objective lens 5, and this error signal is supplied to the control coil 9 as the control signal so that the objective lens 5 is automatically controlled to achieve the just focussed state, so that the distance between the objective lens 5 and the disc becomes constant at all times.

With the apparatus of Figure 4, since the lens 17 having the conical refractive surface 17a is used in

0 127 448

combination with the photo-detector 18 formed of two concentric photo-sensors 18A and 18B, the alignment of the photo-detector 18 becomes simple.

In other words, since in the apparatus of Figure 1 the prism 7 having two rectangular refractive surfaces 7a and 7b is combined with the photo-detector 8 formed of four photo-sensors 8A to 8D arranged in line, in Figure 3A or 3C not only weak light passing through the centre of the prism 7 and through the vicinity of the centre, but also intense light passing through the portions distant from the centre are converged around the dead separating zone between the sensors 8A and 8B and around the dead separating zone between the sensors 8C and 8D, so as to form part of the semicircular spots S on the inner sensors 8B and 8C or on the outer sensors 8A and 8D, and therefore the amount of light on those portions is relatively large. Thus, when the photo-detector 8 is displaced in position from the optical axis and the X-direction and as shown in Figure 3A or 3C, the spots S extend to the outer sensors 8A and 8D or to the inner sensors 8B and 8C, and the focussing error signal is changed greatly as compared with the case in which the photo-detector 8 is at the correct position, and consequently misdetection occurs. Therefore, the adjustment of the position of the photo-detector 8 relative to the optical axis direction and the X-direction must be made with high precision.

On the other hand, since the apparatus of Figure 4 uses the lens 17 having the conical refractive surface 17a combined with the photo-detector 18 formed of two concentric photo-detecting sensors 18A and 18B, in Figure 7A or 7C the portion near the dead zone 18C between the sensors 18A and 18B of the spots S appearing respectively as annular shapes on the inner sensor 18B or the outer sensor 18A, has a small amount of light because only weak light is passed through the vicinity of the centre of the lens 17, while the portion distant from the dead zone 18C has a large amount of light because intense light passes through the portion distant from the centre of the lens 17. In other words, in Figure 7A the amount of light of the spot S is smaller at positions nearer to the outside or to the dead zone 18C, and larger at positions nearer to the inside, while in Figure 7C, the amount of light of the spot S is smaller at positions nearer to the inside or to the dead zone 18C, and larger at positions nearer to the outside. Accordingly, when the photo-detector 18 is slightly displaced relative to the optical axis direction and X and Y-directions, and in Figure 7A or 7C the spot S extends slightly towards the outer sensor 18A or the inner sensor 18B, the focussing error signal hardly changes as compared with the case in which the photo-detector 18 is at the correct position, with the result that there is no risk of mis-detection. Therefore, it is not necessary that the photo-detector 18 be adjusted in position in the optical axis direction and X and Y-directions with high precision.

Moreover, with the apparatus of Figure 4, since the amount of light of the spot S is smaller at positions nearer to the separating zone and larger at positions more distant from the separating zone, and the spot S extends towards the opposite direction to the separating zone as the light is defocussed more and more, the sensitivity of detection is high.

Although the lens 17 has a light loss around its vertex portion, such loss is relatively small because the vertex portion is a dot and not a line. Therefore, in order to decrease the loss, it is not necessary that the vertex be finished with high precision.

However, the apparatus shown in Figure 4 has the following defects. Since the focussing error signal is obtained from the difference between the amounts of light of the centre and periphery of the spot S on the photo-detecting surface of the photo-detector 18, this focussing error signal includes a high-frequency signal leaked as a result of diffraction in pits on the disc. In addition, since the modulation-degree characteristic of light relative to the spatial frequency of pits at the central portion of the spot S is different from that at the peripheral portion thereof, the focussing error signal obtained from the apparatus of Figure 4 is not so accurate.

Moreover, since in the apparatus of Figure 4, the change of radius of the spot S on the photo-detector 18 is detected as a change of the area thereof, the defocussing amount versus focussing error signal characteristic curve as shown in Figure 8 of the accompanying drawings is inversely proportional to the square of the radius of the spot S near the just-focussed state, and thus has poor linearity.

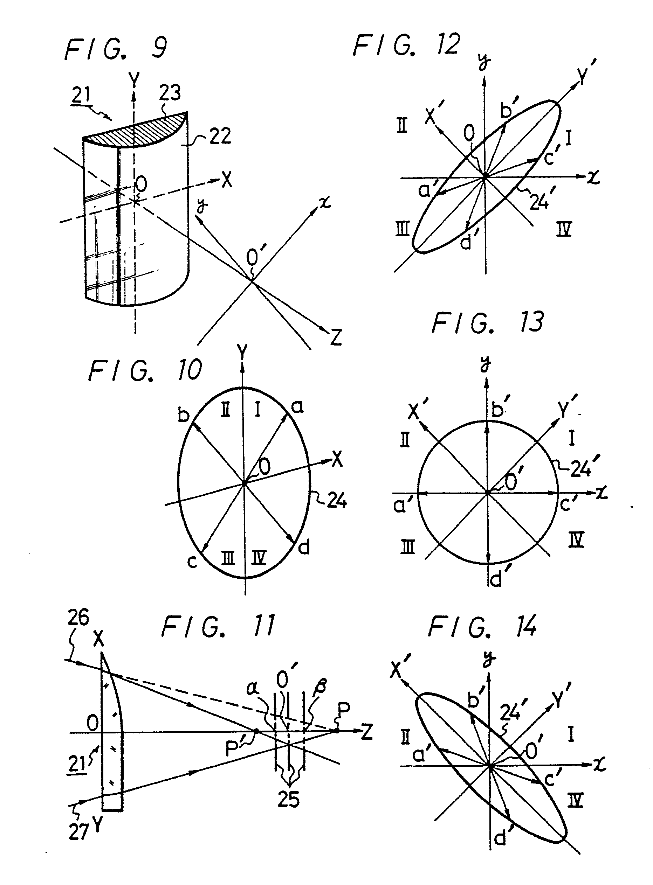

Another focussing error detecting apparatus has been proposed in which the photo-detecting surface of the photo-detector is circular, and the photo-detector is equally divided into four photo-detecting sensors of four quadrants, in front of which a semicylindrical lens is disposed, and from which a focussing error signal is obtained by taking the difference between the sum of the photo-detected signals from the first and third-quadrant photo-detecting sensors and the sum of the photo-detected signals from the second and fourth-quadrant photo-detecting sensors. This apparatus will hereinafter be described with reference to Figure 9 of the accompanying drawings.

A semicylindrical lens 21 has a semicylindrical surface 22 and a rectangular surface 23. On the surface 23, rectangular coordinates with an origin O at its centre are provided; the X-axis parallel to the generating line of the semicylindrical surface 22, the Y-axis perpendicular thereto, and the Z-axis vertical to the surface 23. On the Z-axis is provided an origin O' at the position separated by a predetermined distance from the original O at the semicylindrical surface 22 side of the lens 21, and on the plane making a right angle with the Z-axis are formed rectangular coordinates with the x-axis making an angle of 45° with each positive side of the X-axis and Y-axis, and the y-axis making a right angle therewith. The circular detecting surface of the photo-detector is made coincident with the x-y plane and the detecting surface of the photo-detector is equally divided into four by the x-axis and y-axis to form the photo-detecting sensors of four quadrants.

On the surface 23 of the lens 21 is incident a converged beam, the optical axis of which is coincident

4

with the Z-axis and which has a circular spot 24 on the surface 23 as shown in Figure 10 of the accompanying drawings, which is a perspective view. Axes a to d each making an angle of 45° with the X-axis and Y-axis are temporarily provided on the radius of the circular spot 24 within the first to fourth quadrants I to IV, respectively.

The loci of light rays 26 and 27 transmitted along the XOZ cross-section and the YOZ cross-section of the lens 21 enters the lens 21 and emerges from the lens 21 parallel with the incident light, passing to a point P on the Z-axis because the thickness of the YOZ cross-section is constant. The light ray 26 incident along the XOZ cross-section of the lens 21 is refracted to the Z-axis side and passes to a point P′ on the Z-axis just before the point P, because the XOZ cross-section constitutes a convex lens.

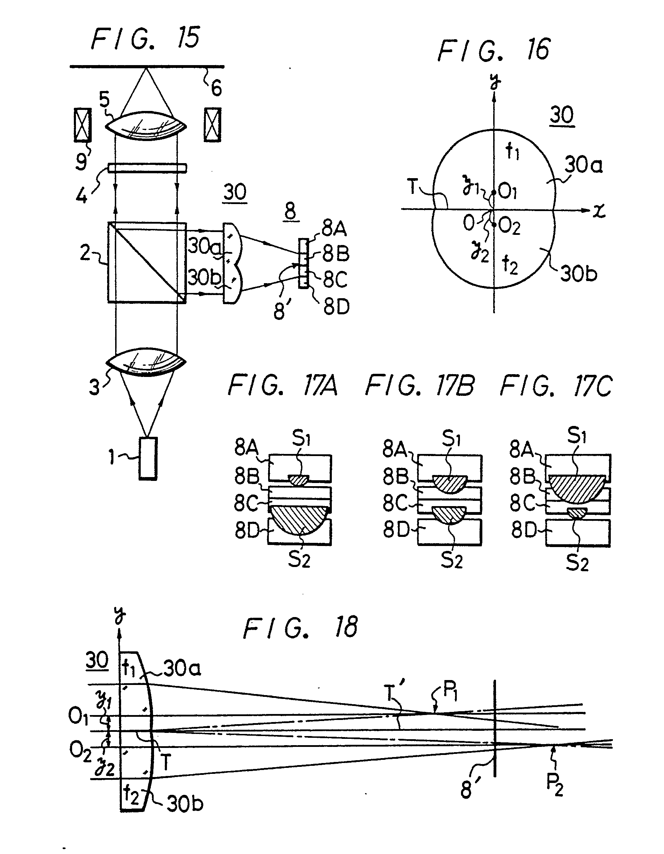

In Figure 11, let it be assumed that when a detecting surface 25 of the photo-detector is positioned at an intermediate point O′ between the points P and P′ (see Figure 9), and when a spot 24′ of the beam irradiated on the detecting surface 25 becomes circular as shown in Figure 13 of the accompanying drawings, the converged beam from the objective lens is focussed on the recorded surface of the optical disc. Then, if the converged beam from the objective lens is focussed at a position before or after the position of the optical disc, the detecting surface 25 of the photo-detector is equivalently displaced in position to a point α before the point O′ or to a point β thereafter. Accordingly, the spot 24′ on the detecting surface 25 of the photo-detector becomes elliptical as shown in Figures 12 and 14 of the accompanying drawings. Specifically, the elliptical spot 24′ in Figure 12 has the major axis extending in the first and third quadrants I and III along the direction with an angle of 45° relative to the x-axis, while the spot in Figure 14 has the major axis extending in the second and fourth quadrants II and IV along the direction with an angle of 45° relative to the x-axis. In Figures 12 to 14, axes a′ to d′ respectively correspond to the axes a to d in Figure 10.

Therefore, if the detecting surface 25 of the photo-detector is larger than the spot 24′, the converging state of light rays by the objective lens is detected from the difference between the sum of the photo-detected signals from the photo-detecting sensors of the first and third quadrants I and III and the sum of the photo-detected signals of the photo-detecting sensors of the second and fourth quadrants II and IV. As a result, the focussing servo can be made to move the objective lens along its optical axis so as to reduce the above difference to zero.

However, in this focussing error signal detecting apparatus having the combination of the semicylindrical lens 21 and the four sensors of the photo-detector, when the spot 24′ on the photo-detecting surface 25 of the photo-detector is displaced in position from the states shown in Figures 12 to 14 in the X′-axis or Y′-axis direction, the accuracy of the focussing error signal is lowered by an amount corresponding to the above displacement.

In view of this, we have proposed in EP—A1—0121989 a focussing error detecting apparatus which can produce a focussing error signal having high precision and excellent linearity.

An example of this previously proposed focussing error detecting apparatus as applied to an optical disc reproducing apparatus will now be described with reference to Figure 15 of the accompanying drawings. Laser light from the laser light source (for example, a semiconductor laser light source) 1 is passed through the collimator lens 3, the polarized beam splitter 2, the quarter wave plate 4 and the objective lens 5 sequentially and is incident on the recorded surface 6 of the disc. On the recorded surface 6 of the disc is recorded, for example, audio or video information modulated on a carrier in the form of pits formed along a spiral track and which can be optically read. Then, the laser light reflected from the recorded surface 6 is passed through the objective lens 5, the quarter wave plate 4, the polarized beam splitter 2 and a composite lens 30, and is incident on the photo-detector 8.

The composite lens 30 consists of a pair of, for example, convex lens regions 30a and 30b divided by a flat interface T including the optical axis O of the light incident on the composite lens 30 as shown in Figures 16 and 18 of the accompanying drawings. The paired lens regions 30a and 30b have respective different back focal lengths $f_1$ and $f_2$, and the optical axes $O_1$ and $O_2$ of the lens regions 30a and 30b are separated from each other by a predetermined distance. As shown in Figure 16, the composite lens 30 is positioned on the x-y plane perpendicular to the optical axis O of the incident light with its flat interface T made coincident with the x-axis. In this example, the optical axes $O_1$ and $O_2$ of the respective lens regions 30a and 30b pass through the points on the y-axis, which are respectively separated by distances $y_1$ and $y_2$ on the opposite sides of the flat interface T. This composite lens 30 may be formed by bonding a pair of separate lens regions 30a and 30b made of glass or plastics material, or by integrally moulding the regions with plastics material. Although the configuration of the lens 30 is not made circular in the drawings for convenience of explanation, it is practical for the lens 30 to be circular. The other examples which follow have a similar lens 30.

Moreover, as shown in Figure 18, the photo-detector 8 is disposed in such a manner that the photo-detecting surface 8′ is positioned on the optical axis O of the incident light at the position intermediate between the points $P_1$ and $P_2$ (which are respectively positioned on the optical axes $O_1$ and $O_2$ on respective sides of a plane T′ extending from the flat interface T) at which the light beams emerging from the pair of lens regions 30a and 30b when the light incident on the composite lens 30 is in the focussed state, or in this example when the incident light rays are parallel to each other. As shown in Figure 17, the photo-detector 8 consists of first and second photo-detecting sensors 8B and 8A for receiving light rays passed through the far-side portion and the near-side portion of the first lens region 30a of the pair of lens regions 30a and 30b relative to the flat interface T, and of third and fourth photo-detecting sensors 8D and 8C for receiving light rays passed through the far-side portion and near-side portion of the second lens region 30b of the pair of lens regions 30a and 30b relative to the flat interface T. In this example, the first to fourth photo-detecting sensors are rectangular and sequentially disposed in one direction (for example, in the direction of the track on the recorded surface of the disc) in the order of 8A to 8D. In this case, the photo-detecting sensors 8B and 8C may be formed integrally.

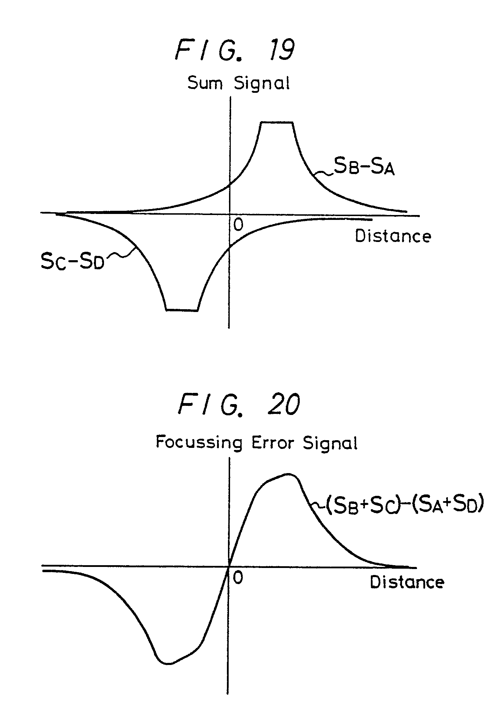

The focussing error signal (see Figure 20) is obtained from the difference, $(S_B + S_C) - (S_A + S_D)$ between the sum, $S_B + S_C$ of the first and fourth photo-detected signals $S_B$, $S_C$ from the first and fourth photo-detecting sensors 8B and 8C and the sum, $S_A + S_D$ of the second and third photo-detected signals $S_A$, $S_D$ from the second and third photo-detecting sensors 8A and 8D. This focussing error signal is supplied to the control coil 9 as the focus control signal.

The operation of the apparatus of Figure 15 will be described with reference to Figure 17 of the accompanying drawings. When the recorded surface 6 of the disc is at the correct position relative to the objective lens 5, so that the just focussed state is brought about, as shown in Figure 17B the collimated light rays are incident on the composite lens 30 and focussed to form the semicircular spots $S_1$ and $S_2$ of the same size and oriented in the same direction on the sensors 8A and 8B, and 8C and 8D of the photo-detector 8. Accordingly, in this case, the focussing error signal becomes zero, so that the objective lens 5 is kept at the same position.

When the recorded surface 6 of the disc is positioned nearer to the objective lens 5 to cause the under-focussed state, the light incident on the composite lens 30 is slightly out of the collimated state, so that as shown in Figure 17A, the spots $S_1$ and $S_2$ on the photo-detector 8 respectively appear as a small semicircle on the sensors 8A and 8B, and a large semicircle oriented in the same direction on the sensors 8C and 8D. Accordingly, in this case, the focussing error signal becomes negative to drive the objective lens 5 to move away from the recorded surface 6.

When the recorded surface 6 of the disc is positioned distant from the objective lens 5 to cause the over-focussed state, the light incident on the composite lens 30 is slightly out of the collimated state in the opposite direction so that as shown in Figure 17C the spots $S_1$ and $S_2$ on the photodetector 8 respectively appear as a large semicircle on the sensors 8A and 8B and a small semicircle oriented in the same direction on the sensors 8C and 8D. Accordingly, in this case, the focussing error signal becomes positive to drive the objective lens 5 to move towards the recorded surface 6.

Thus, the focussing error, namely, the distance between the disc and the objective lens 5 is detected by the composite lens 30 and the photo-detector 8 formed of the four photo-detecting sensors 8A to 8D arranged in one direction. This error signal is supplied to the control coil 9 as the focus control signal so that the objective lens 5 is automatically controlled to achieve the just focussed state at all times, or to be positioned at a constant distance from the disc.

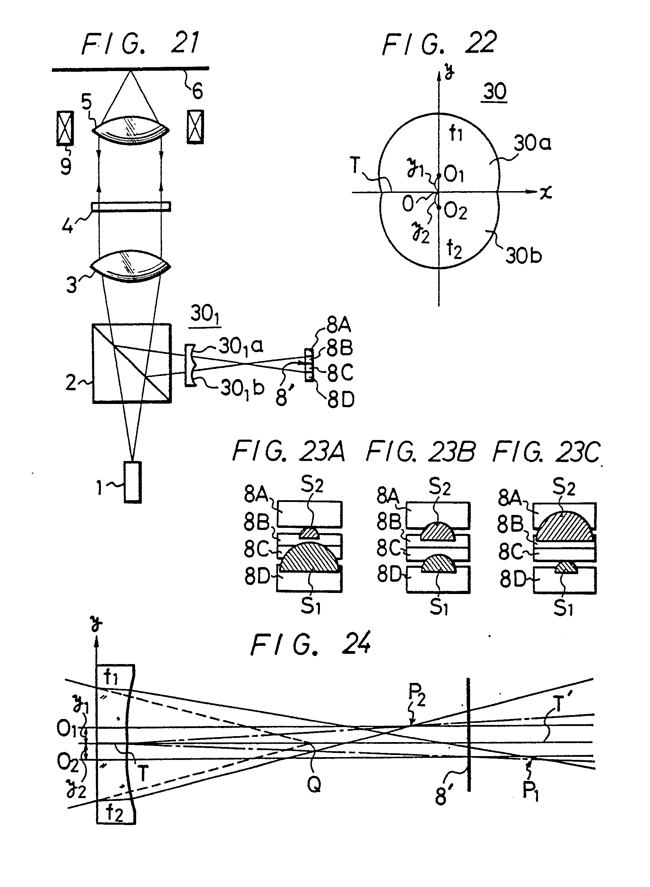

Another example of such a previously proposed optical disc reproducing apparatus will be described with reference to Figure 21 of the accompanying drawings. As shown in Figure 21, in this example, the composite lens 30 consists of a pair of concave lens regions 30a and 30b. Laser light from the laser light source (for example, a semiconductor laser light source) 1 is passed through the polarized beam splitter 2, the collimater lens 3, the quarter wave plate 4 and the objective lens 5 in turn and is incident on the recorded surface 6 of the disc. On the recorded surface 6 of the disc is recorded, for example, audio or video information modulated on a carrier in the form of pits formed along a spiral track and which can be optically read. The laser light reflected from the recorded surface 6 is passed through the objective lens 5, the quarter wave plate 4, the collimator lens 3, the polarizing beam splitter 2 and the composite lens 30 in turn and is incident on the photo-detector 8.

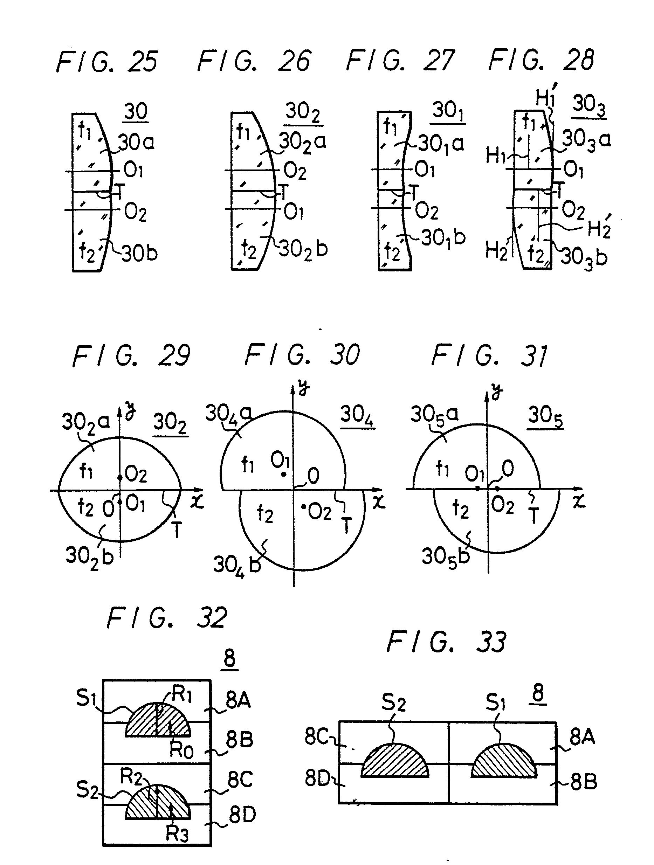

The composite lens 30 consists of a pair of, for example, concave lens regions 30a and 30b divided by a flat interface T therebetween which includes the optical axis O of the light incident on the composite lens 30 as shown in Figures 22 and 24. The paired lens regions 30a and 30b have different back focal lengths $f_1$ and $f_2$, and the optical axes $O_1$ and $O_2$ of the pair of lens regions 30a and 30b are spaced from each other. In case of Figure 22, the composite lens 30 is positioned on the x-y plane which makes a right angle with the optical axis O of the incident light with the flat interface T made coincident with the x-axis. Here, the optical axes $O_1$ and $O_2$ of the lens regions 30a and 30b respectively pass through the points lying on the y-axis and separated by distances y1 and y2 from the flat interface T in opposite directions.

The photo-detector 8 is positioned, as shown in Figure 24 of the accompanying drawings, so that photo-detecting surface 8' is placed on the optical axis O at a position intermediate between the points $P_1$ and $P_2$ (which are positioned on the optical axes $O_2$ and $O_1$ on the opposite sides of the plane T' extending from the flat interface T) where the light rays exiting from the pair of lens regions 30a and 30b are focused when the light incident on the composite lens 30 is in the focussed state, or when the incident light is converged towards a virtual point Q. The photo-detector 8 as shown in Figure 23 consists of first and second photo-detecting sensors 8C and 8D for receiving the light rays respectively passed through the far-side portion and the near-side portion of the first lens regions 30a of the pair of lens regions 30a and 30b relative to the flat interface T, and third and fourth photo-detecting sensors 8A and 8B for receiving light rays respectively passed through the far-side portion and the near-side portion of the second lens regions 30b of the pair of lens regions 30a and 30b relative to the flat-interface T. Here, the first to fourth photo-detecting sensors are rectangular and sequentially arranged in one direction (for example, in the direction

6

# 0 127 448

of the track of the recorded surface of the disc) in the order of 8A to 8D. In this case, the photo-detecting sensors 8B and 8C may be formed integrally.

Then, the focussing error signal is obtained from the difference, $(S_C + S_B) - (S_D + S_A)$ between the sum $S_C + S_B$ of the first and fourth photo-detected signals $S_C$ and $S_B$ from the first and fourth light detecting sensors 8C and 8B, and the sum $S_D + S_A$ of the second and third photo-detected signals $S_D$ and $S_A$ from the second and third photo-detecting sensors 8D and 8A. This focussing error signal is supplied to the control coil 9 as the focussing control signal.

The operation of the example in Figure 21 will be described with reference to Figure 23 of the accompanying drawings. When the recorded surface 6 of the disc is at the correct position relative to the objective lens 5 to achieve the just focussed state, light converged towards the virtual point Q is incident on the composite lens 30 so that as shown in Figure 23B, the spots $S_1$ and $S_2$ on the photo-detector 8 respectively appear as semicircles of the same size and oriented in the same direction on the sensors 8C and 8D, and the sensors 8A and 8B. Accordingly, in this case, the focussing error signal becomes zero so that the objective lens 5 is kept at the same position.

When the recorded surface 6 of the disc is positioned closer to the objective lens 5 causing the under-focussed state, the light incident on the composite lens 30 is slightly out of the just focussed state so that as shown in Figure 23a the spots $S_1$ and $S_2$ on the photo-detector 8 respectively appear as a large semicircle on the sensors 8C and 8D, and a small semicircle oriented in the same direction on the sensors 8A and 8B. Accordingly, in this case, the focussing error signal becomes negative to drive the objective lens 5 to move away from the recorded surface 6.

When the recorded surface 6 of the disc is positioned far from the objective lens 5 causing the over-focussed state, the light incident on the composite lens 30 is slightly out of the just focussed state in the opposite direction, so that as shown in Figure 23C the spots $S_1$ and $S_2$ on the photo-detector 8 respectively appear as a small semicircle on the sensors 8C and 8D, and a large semicircle oriented in the same direction on the sensors 8A and 8B. Accordingly, in this case, the focussing error signal becomes positive to drive the objective lens 5 to move towards the recorded surface 6.

As described above, the focussing error, namely the distance between the disc and the objective lens 5 is detected by the composite lens 30 and the photo-detector 8 formed of four photo-detecting sensors 8A to 8D arranged in one direction. This error signal is supplied to the control coil 9 as the focussing control signal so that the objective lens 5 is automatically controlled to bring the just focussed state, or to be positioned at a constant distance from the disc.

Examples of the composite lens 30 will be described with reference to Figures 25 to 31 of the accompanying drawings. In the composite lens 30 shown in Figure 25, the pair of lens regions 30a and 30b are both formed of convex lenses, while in the composite lens shown in Figure 27 the pair of lens regions 30a and 30b are both formed of concave lenses. In both examples, the optical axes $O_1$ and $O_2$ of the paired lens regions 30a and 30b exist within the lens regions 30a and 30b themselves. In the composite lenses 30 shown in Figures 26 and 29, the optical axes $O_1$ and $O_2$ of the pair of lens regions 30a and 30b respectively exist within the other lens regions 30b and 30a. Although not shown, both the optical axes $O_1$ and $O_2$ of the pair of lens regions 30a and 30b may be positioned in any one of the lens regions. Also, as shown in Figure 28, it is possible that lenses of the same power are used as the pair of lens regions 30a and 30b and combined to have different major surfaces $H_1$ and $H_1'$, and $H_2$ and $H_2'$. Moreover, it is possible that when the composite lens 30 is placed on the x-y plane so that the flat interface T therebetween coincides with the x-axis, the optical axes $O_1$ and $O_2$ are positioned on the y-axis at positions on opposite sides of the flat interface T as shown in Figures 16, 22 and 29, on neither of the x-axis and y-axis at positions on opposite sides of the flat interface T as shown in Figure 30, or on the x-axis, namely on the flat interface T as shown in Figure 31.

In addition, the arrangement of the photo-detecting sensors 8A to 8D of the photo-detector 8 can be selected in response to each positional relation between the optical axes $O_1$ and $O_2$ of the composite lens 30. Figure 32 of the accompanying drawings illustrates the arrangement (substantially the same as that in Figure 17) of the photo-detecting sensors 8A to 8D of the photo-detector 8 when the optical axes of the pairs of lens regions 30a and 30b of the composite lens 30 are positioned at the points on the y-axis and on the opposite sides of the flat interface T as shown in Figure 16. Such arrangement can be used for the case where the optical axes $O_1$ and $O_2$ of the composite lens 30 are displaced a little from the y-axis as shown in Figure 30. When the optical axes $O_1$ and $O_2$ of the pair of lens regions 30a and 30b of the composite lens 30 exist at points on the x-axis, namely, on the flat interface T, the photo-detecting sensors 8A to 8D of the photo-detector 8 are arranged in two rows of two sensors each as shown in Figure 33 of the accompanying drawings.

In addition, as shown in Figure 32, if the radii of the semicircular spots $S_1$ and $S_2$ on the photo-detecting sensors 8A and 8B, and 8C and 8D of the photo-detector 8 are represented by R1 and R2, the lengths of the spots $S_1$ and $S_2$ on the photo-detecting sensors 8B and 8D by $R_0$ and $R_3$ (where the widths of the dead zones between the photo-detecting sensors 8A to 8D are neglected), and the relation between these lengths $R_0$ to $R_3$ is selected to satisfy $R_0/R_1 = R_3/R_2$, then the focussing error signal $(S_A + S_D) \sim (S_B + S_C)$ resulting from the calculation of the photo-detected signals $S_A$ to $S_D$ upon just focussing can be reduced to zero even if $R_1 = R_2$ is not satisfied. When $R_1 = R_2$, the amount of light incident on the photo-detecting sensors 8A and 8C must be equal to the amount of light incident on the photo-detecting sensors 8B and 8D and thus,

7

**0 127 448**

regardless of $R_0$ (= $R_3$), it is possible to reduce to focussing error signal to zero upon just focussing.

The above focussing error, detecting apparatus in the respective examples have the following advantages. Since the focussing error signal is obtained from the sum $\{(S_A \sim S_C) + (S_D \sim S_B) = (S_A + S_D) \sim (S_B + S_C)\}$ of the difference, $S_A \sim S_C$ (or $S_D \sim S_B$) between the photo-detected signals produced from the photo-detecting sensors for the light rays passing through the far-side portions of the lens regions 30a and 30b of the composite lens 30 relative to the flat interface T, and the difference $S_D \sim S_B$ (or $S_A \sim S_C$) between the photo-detected signals produced from the photo-detecting sensors for the light rays passing through the near-side portions of the lens regions 30a and 30b relative to the flat interface T, this focussing error signal has good accuracy due to the fact that high-frequency signals leaked due to diffraction in the pits of the disc, and the difference in the modulation degrees of light relative to the spatial frequency of pits at the centre and periphery of the spots are cancelled.

Also, since the focussing error signal is obtained from the sum, $\{(S_A + S_D) \sim (S_B + S_C)\}$ of the difference $S_A + S_B$ ( or $S_B - S_A$) between the photodetected signals produced from the photo-detecting sensors for the light rays passed through the far-side portion and the near-side portion of the lens region 30a of the composite lens 30 relative to the flat interface T, and the difference, $S_D - S_C$ (or $S_C - S_D$) between the photo-detected signals produced from the photo-detecting sensors for the light rays passed through the near-side portion and far-side portion of the lens region 30b of the composite lens 30 relative to the flat interface T, the difference signals $S_B - S_A$ and $S_C - S_D$ are symmetrical (see Figure 19), and thus the focussing error signal has excellent linearity as shown in Figure 20.

Moreover, as shown in Figure 32, if the radii of the semicircular spots $S_1$ and $S_2$ of the photo-detecting sensors 8A and 8B, and 8C and 8D of the photo-detector 8 are represented by $R_1$ and $R_2$, and the lengths of the spots $S_1$ and $S_2$ on the photo-detecting sensors 8B and 8D by $R_0$ and $R_3$ (the widths of the dead zones between the photo-detecting sensors 8A to 8D are neglected), the amount of light incident on the photo-detecting sensors 8A and 8C is equal to the amount of light incident on the photo-detecting sensors 8B and 8D under the condition of $R_1 = R_2$ and thus, it is possible to reduce the focussing error signal to zero upon just focussing irrespective of $R_0$(=$R_3$). Accordingly, even if the spots $S_1$ and $S_2$ on the photo-detector 8 are displaced in the arrangement direction of the photo-detecting sensors 8A and 8B, and 8C and 8D, the precision of the focussing error signal is not lowered.

Incidentally, since the composite lens 30 used in the above focussing error detecting apparatus is complicated in shape and structure, if plastics material is used to make it, the composite lens 30 can be produced easily as compared with the case in which glass is used. However, a lens of plastics material changes more in focal length for a given change of temperature than a glass lens does. Accordingly, if the composite lens 30 made of plastics material is used in the above focussing error detecting lens 30 made of plastics material is used in the above focussing error detecting apparatus and is combined with the photo-detector to obtain the focussing error signal, offset occurs in the focussing error signal with change of temperature, so that the precision of the focussing servo for the objective lens is lowered.

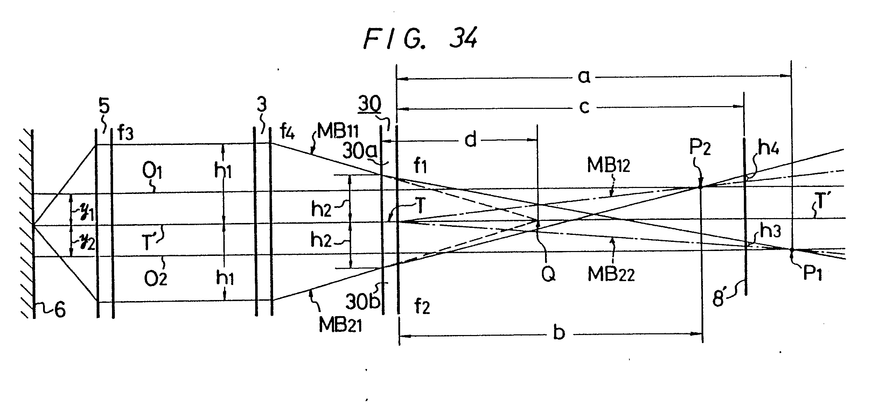

Referring to Figure 34 of the accompanying drawings, the way the converging state of the converging beam from the objective lens 5 on the recorded surface 6 of the optical disc in the optical disc reproducing apparatus of, for example, Figure 21 changes with temperature change will be considered mathematically. In Figure 34, the objective lens 5, the collimator lens 3 and the composite lens (concave lens) 30 (see Figures 21, 22 and 24) are represented by lines corresponding to the first and second major surfaces. Reference characters $BM_{11}$, $BM_{21}$ and $BM_{12}$, $BM_{22}$ designate light rays which are respectively incident on the outermost peripheries of the first and second lens regions 30a and 30b of the lens 30 and the flat interface T. In this case, the relation between the focal lengths $f_1$ and $f_2$ of the first and second lens regions 30a and 30b is selected as, for example, $f_1$ is less than $f_2$. The refractive index of the lens 30 is made uniform and taken as n. The focal lengths of the objective lens 5 and the collimator lens 3 are respectively taken as $f_3$ and $F_4$. The lengths from the second major surface of the lens 30 to converged points P1 and P2 along the direction of a plane T' are respectively taken as a and b. The length from the second major surface of the lens 30 to a photo-detecting surface 8' along the direction of the plane T' is taken as c. The length between the first major surface of the lens 30 and a conjugate point q of a beam incident thereon (converged beam) along the direction of the plane T' is taken as d. The heights of the light rays $MB_{11}$, $MB_{21}$ incident on the lens 3 at its outermost periphery from the plane T' are respectively taken as $h_1$, while the heights of the light rays $MB_{11}$, $MB_{21}$ incident on the lens 30 from the plane T' are respectively taken as $h_2$.

Then, the heights $h_1$ and $h_2$ are respectively expressed by the following equations:

$$h_1 = f_3 . NA_5 \tag{1}$$

$$h_2 = d/f_4 . h_1 \tag{2}$$

where $NA_5$ represents the N.A. (numerical aperture) of the objective lens 5.

From the lens formulae the following equations are established between a, b, d, $f_1$ and $f_2$.

$$\frac{1}{d} = \frac{1}{a} + \frac{1}{f_1} \tag{3}$$

8

$$\frac{1}{d} - \frac{1}{b} + \frac{1}{f_2} \tag{4}$$

From equations (3) and (4), a and b are respectively expressed by the following equations:

$$a = \frac{df_1}{d + f_1} \tag{5}$$

$$a = \frac{df_2}{d + f_2} \tag{6}$$

If the height from a point at which the light ray $MB_{22}$ is incident on the photo-detecting surface 8' to a point at which the light ray $MB_{11}$ is similarly incident thereon is taken as $h_3$, and the height from a point at which the light ray $MB_{12}$ is incident on the photo-detecting surface 8' to a point at which the light ray $MB_{21}$ is similar incident thereon is taken as $h_4$, the heights $h_3$ and $h_4$ are respectively expressed by the following equations:

$$h_3 = \frac{h_2 (a - c)}{b} \tag{7}$$

$$h_4 = \frac{h_2 (a - c)}{b} \tag{8}$$

If $h_3 = h_4 = h_5$ in equations (7) and (8), c and $h_5$ are respectively expressed by the following equations:

$$c = \frac{2ab}{a + b} \tag{9}$$

$$h_5 = \frac{h_2 (b - a)}{a + b} \tag{10}$$

If equations (5) and (6) are used to substitute in equation (9), the following equation is obtained:

$$c = \frac{2df_1 f_2}{d (f_1 + f_2) + 2f_1 f_2} \tag{11}$$

In general when the radii of curvature of both surfaces of a lens are taken as $R_1$ and $R_2$, and the refractive index thereof is taken as n, the focal length f of the lens can be expressed as follows:

$$\frac{1}{f} = (n - 1) (\frac{1}{R_1} - \frac{1}{R_2}) \tag{12}$$

The relation between the change of the focal length f to change of the refractive index n caused by change of the temperature T is expressed by the following equation:

$$\frac{1}{f} \cdot \frac{df}{dT} = \frac{-1}{n - 1} \cdot \frac{dn}{dT} \tag{13}$$

Then, the changing ratio dc/dT of the length c relative to the change of temperature T is required. Modifying equation (11) yields the following equation:

$$\frac{1}{c} = \frac{1}{2} (\frac{1}{f_1} + \frac{1}{f_2} + \frac{1}{d}) \tag{14}$$

9

Differentiating c, $f_1$ and $f_2$ in equation (14) by T yields:

$$\frac{1}{c^2}\frac{dc}{dT} = \frac{1}{2}\left(\frac{1}{f_1^2}\cdot\frac{df_1}{dT} + \frac{1}{f_2^2}\cdot\frac{df_2}{dT}\right) \tag{15}$$

Accordingly, dc/dT is modified into the following equation if the equations (13) and (14) are used to substitute in the equation (15), and $df_1/dT = df_2/dT$ is taken:

$$\frac{dc}{dT} = C^2\left(\frac{1}{c} - \frac{1}{d}\right)\cdot\frac{-1}{n-1}\cdot\frac{dn}{dT} \tag{16}$$

The change of the length c corresponds to the defocussed amount $\Delta Z$ ($= \Delta c/2\beta^2$) on the recorded surface 6 of the disc, where $\beta$ is the longitudinal magnification, which is the composite focal length $f_1$ (or $f_2$) divided by $f_3$. Then $\Delta Z$ is expressed by the following equation:

$$\Delta Z = \frac{-1}{(n-1)\cdot 2\beta^2}\cdot\left(c - \frac{c^2}{d}\right)\cdot\frac{dn}{dT}\cdot\Delta T \tag{17}$$

When the material of the lens 30 is acrylic, dn/dT becomes $1.4 \times 10^{-4}$ (per °C). When the temperature change $\Delta T$ is 30°C, the defocussed amount $\Delta Z$ is 1 micron, when $f_1 = -10$ mm, $f_2 = -11$ mm, d = 6.18 mm and n = 1.486, so that it becomes difficult to detect the focussing error with high precision.

According to the present invention there is provided a focussing error detecting apparatus comprising:
a composite lens formed of a single lens made of glass and a single lens made of plastics material; and
a photo-detector disposed behind said composite lens;
wherein:
said plastics lens is formed of a pair of lens regions divided by a flat interface including an optical axis of light incident on said composite lens;
said pair of lens regions have back focal lengths different from each other and optical axes spaced apart from each other;
said glass lens is a uniform lens having its optical axis on said flat interface;
said photo-detector is placed such that its photo-detecting face is positioned at a middle point between converged points of light rays emitted from said pair of lens regions on the optical axis of said incident light when said light incident on said composite lens is in the focussed state; and
said photo-detector is formed of first and second photo-detecting sensors for receiving light rays passed through the far-side portion and near-side portion of said first lens region of said pair of lens regions relative to said flat interface and third and fourth photo-detecting sensors for receiving light rays passed through the near-side portion and far-side portion of said second lens region of said pair of lens regions relative to said flat interface so that a focussing error signal is produced from the difference between the sum of first and fourth photo-detected sigals from said first and fourth photo-detecting sensors and the sum of second and third photo-detected signals from said second and third photo-detecting sensors.

The invention will now be described by way of example with reference to the remaining accompanying drawings, throughout which like parts are again referred to by like references, and in which:

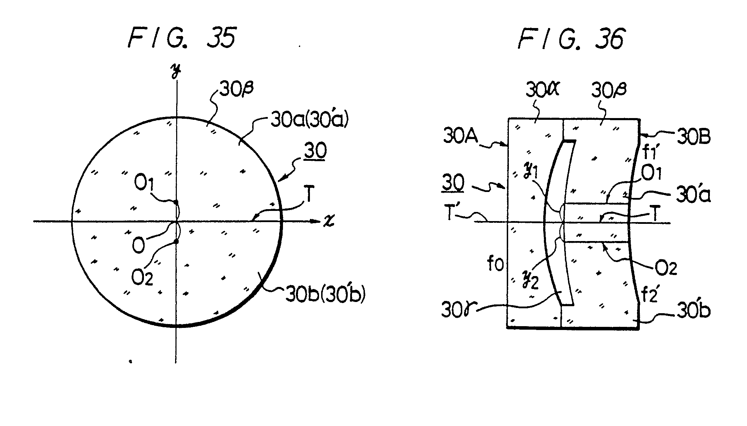

Figures 35 and 36 are respectively a plan view and a cross-sectional view showing an example of a composite lens used in an embodiment of focussing error detecting apparatus according to the present invention.

Now, an embodiment of focussing error detecting apparatus according to the present invention will be described with reference to Figures 35 and 36. In this case, however, only a composite lens used therein will be described and the construction of the remainder of the focussing error detecting apparatus will be omitted because apart from the lens the focussing error detecting apparatus is constructed the same as those of Figure 15 and the following.

Figures 35 and 36 show the whole of a composite lens 30, which is a concave lens corresponding to the composite lens 30 shown in Figures 22 and 24 and used in the apparatus shown in, for example, Figure 21. The composite lens 30 consists of a glass single lens $30\alpha$ and a plastics single lens $30\rho$ which are bonded together along their peripheries, for example. The glass single lens $30\alpha$ is a uniform lens having its optical axis on a flat interface T' and the focal length of which is $f_0$ (positive or negative). In this embodiment, the glass single lens $30\alpha$ is a concave lens of flat concave type. The focal length $f_0$ is, for example, $-10.5$ mm. The plastics single lens $30\rho$ is, for example, a concave and convex type lens. A space $30\gamma$ is defined between the single lenses $30\alpha$ and $30\rho$.

As shown in Figure 35, the plastics single lens $30\rho$ includes lens regions $30'a$ and $30'b$ which are vertically halved by the boundary flat interface T(x-axis) including an optical axis O of incident light. The focal length (back focal length) of the first lens region $30'a$ is taken as $f'_1$ and the focal length (back focal length) of the second lens region 30'b is taken as $f'_2$. The optical axes $O_1$ and $O_2$ of the respective lens regions 30'a and 30'b are spaced apart on the y-axis by predetermined lengths $y_1$ and $y_2$ relative to the optical axis O (boundary flat interface T) of the incident light in the same way as in Figures 22 and 24. The focal lengths $f'_1$ and $f'_2$ may be either positive or negative in general if $f'_1 \neq f'_2$. Also it is possible that any one of the focal lengths $f'_1$ and $f'_2$ is infinity. In this embodiment, the focal lengths $f'_1$ and $f'_2$ are respectively selected to be −210 mm and 231 mm. The outline of the composite lens 30 is not critical, but in practice it is usually circular as shown in Figure 35.

The lens regions 30'a and 30'b of the single lens 30β and the corresponding lens regions of the single lens 30α constitute lens regions 30a and 30b of the composite lens (flat concave lens) 30.

Such single lens 30β can be produced in one of two ways, one of which is to make lens regions made of plastics lens materials of two kinds having different refractive indices such as acrylic material, combined by bonding or the like and to mould and abrade the bonded lens regions thereby to produce the single lens 30β.

The other way is to mould and abrade lenses made of the same plastics material such as acrylic material but with different curvatures, namely, different focal lengths, divide the lens into two and to combine the lens regions thus obtained by bonding or the like thereby to produce the single lens 30β.

The changing ratio of the focal length or the like of the composite lens 30 thus formed relative to the change of the temperature will now be considered. If the refractive indices of the glass single lens 30α and the plastics single lens 30β are respectively taken as nα and nβ, the changing ratios of the focal lengths $f_1$ and $f_2$ of the lens regions 30a and 30b relative to the temperature T will be expressed by the following equations with reference to equation (13):

$$\frac{1}{f_1} \cdot \frac{df_1}{dT} = \frac{f_1}{f_0} \cdot \frac{-1}{n\alpha - 1} \cdot \frac{dn\alpha}{dT} + \frac{f_1}{f'_1} \cdot \frac{-1}{n\beta - 1} \cdot \frac{dn\beta}{dT} \tag{18}$$

$$\frac{1}{f_2} \cdot \frac{df_2}{dT} = \frac{f_2}{f_0} \cdot \frac{-1}{n\alpha - 1} \cdot \frac{dn\alpha}{dT} + \frac{f_2}{f'_2} \cdot \frac{-1}{n\beta - 1} \cdot \frac{dn\beta}{dT} \tag{19}$$

However, dnα/dT of the glass single lens 30α is $1.7 \times 10^{-6}$ (per °C) in the case of BK$_7$ glass (substantially the same in the case of other glass), while dnβ/dT of the plastics single lens 30ρ is $-1.4 \times 10^{-4}$ (per °C) in the case of acryl (substantially the same in the case of other plastics). Consequently, as will be clear from the above, the condition dnα/dT is much less than dnβ/dT is established between dnα/dT and dnβ/dT. Thus, the above equations (18) and (19) can respectively be approximated to as:

$$\frac{1}{f_1} \cdot \frac{df_1}{dT} \doteqdot \frac{f_1}{f'_1} \cdot \frac{-1}{n\beta - 1} \cdot \frac{dn\beta}{dT} \tag{20}$$

$$\frac{1}{f_2} \cdot \frac{df_2}{dT} \doteqdot \frac{f_2}{f'_2} \cdot \frac{-1}{n\beta - 1} \cdot \frac{dn\beta}{dT} \tag{20}$$

Moreover, dc/dT when the composite lens 30 in Figures 35 and 36 is applied to the optical system in Figure 34 can be expressed by the following equation with reference to equations (15) and (16):

$$\frac{dc}{dT} = \frac{c^2}{2} \left( \frac{1}{F_1{}^2} \cdot \frac{df_1}{dT} + \frac{1}{f_2{}^2} \cdot \frac{df_2}{dT} \right) = \frac{c^2}{2} \cdot \frac{-1}{n\alpha - 1} \cdot \frac{dn\beta}{dT} \cdot \left( \frac{1}{f'_1} + \frac{1}{f'_2} \right) \tag{22}$$

Accordingly, in order to reduce dc/dT, it is sufficient to make $(1/f'_1 + 1/f'_2)$ small. In other words, if $f_1$ and $f_2$ are determined, it is sufficient to make $f_1/f'_1$ and $f_2/f'_2$ small. Also if $f'_1$ and $f'_2$ are selected to satisfy the condition $f'_1/f'_2 = -1$, dc/dT can be reduced approximately to zero.

With the complex lens 30 described just above, if as the glass single lens 30α one is used which has one optical axis and uniform focal length, the single lens 30ρ is formed as a plastics lens and the two lenses are bonded together to form the complex lens, the manufacturing process is simple and the changing ratios of the focal lengths $f_1$ and $f_2$ of the lens regions 30a and 30b relative to the change of the temperatures T can be made small.

Moreover, if the above composite lens 30 is combined with the photo-detector described above, the offset appearing in the focussing error signal from the focussing error signal detecting apparatus caused by temperature change can be reduced, and hence a focussing error signal with excellent precision can be produced.

The composite lens 30 used in the embodiment of the present invention can be applied to the examples of the modified complex lenses used in the examples of the previously proposed focussing error signal detecting apparatus shown in Figure 15 and the following figures.

11

**Claims**

1. A focussing error detecting apparatus comprising:

a composite lens (30) formed of a single lens (30α) made of glass and a single lens (30β) made of plastics material; and

a photo-detector (8) disposed behind said composite lens (30);

wherein:

said plastics lens (30β) is formed of a pair of lens regions (30'a, 30'b) divided by a flat interface (T) including an optical axis (O) of light incident on said composite lens (30);

said pair of lens regions (30'a, 30'b) have back focal lengths $(f'_1, f'_2)$ different from each other and optical axes $(O_1, O_2)$ spaced apart from each other;

said glass lens (30α) is a uniform lens having its optical axis on said flat interface (T);

said photo-detector (8) is placed such that its photo-detecting face is positioned at a middle point between converged points of light rays emitted from said pair of lens regions (30'a, 30'b) on the optical axis of said incident light when said light incident on said composite lens (30) is in the focussed state; and

said photo-detector (8) is formed of first and second photo-detecting sensors (8A, 8B) for receiving light rays passed through the far-side portion and near-side portion of said first lens region (30'a) of said pair of lens regions (30'a, 30'b) relative to said flat interface (T) and third and fourth photo-detecting sensors (8C, 8D) for receiving light rays passed through the near-side portion and far-side portion of said second lens region (30'b) of said pair of lens regions (30'a, 30'b) relative to said flat interface (T) so that a focussing error signal is produced from the difference betwen the sum $(S_A + S_D)$ of first and fourth photo-detected signals from said first and fourth photo-detecting sensors (8A, 8D) and the sum $(S_B + S_C)$ of second and third photo detected signals from said second and third photo-detecting sensors (8B, 8C).

2. A focussing error detecting apparatus according to claim 1 wherein the relation between the focal lengths $(f'_1, f'_2)$ of said pair of lens regions (30'a, 30'b) is selected so as to satisfy:

$$f'_1/f'_2 = -1$$

where $f'_1$ is the back focal length of said first lens region (30'a) and $f'_2$ is the back focal length of said second lens region (30'b).

**Patentansprüche**

1. Gerät zur Fokusfehlerdetektion, mit

— einer Verbundlinse (30), die aus einer Einzellinse (30α) aus Glas und einer Einzellinse (30β) aus Kunststoffmaterial gebildet ist, und

— einem Fotodetektor (8), der hinter der Verbundlinse (30) angeordnet ist,

wobei

— die Kunststofflinse (30β) aus einem Paar von Linsenbereichen (30'a, 30'b) gebildet ist, die durch eine ebene Grenzfläche (T) getrennt sind, die eine optische Achse (O) des Lichts, das auf die Verbundlinse (30) auftrifft, enthält,

— das Paar von Linsenbereichen (30'a, 30'b) sich voneinander unterscheidende hintere Brennweiten $(f'_1, f'_2)$ und voneinander beabstandete optische Achsen $(O_1, O_2)$ aufweist,

— die Glaslinse (30α) eine homogene Linse ist, die ihreoptische Achse auf der ebenen Grenzfläche (T) hat,

— der Fotodetektor (8) derart angeordnet ist, daß seine lichtempfindliche Seite bei einem Mittelpunkt zwischen konvergierten Punkten von von dem Paar von Linsenbereichen $(30'_a, 30'_b)$ emittierten Lichtstrahlen auf der optischen Achse des einfallenden Lichts positioniert ist, wenn sich das auf die Verbundlinse (30) auftreffende Licht im fokussierten Zustand befindet, und

— der Fotodetektor (8) aus ersten und zweiten lichtempfindlichen Sensoren (8A, 8B) zum Empfang von Lichtstrahlen, die den abgewandten Abschnitt und den zugewandten Abschnitt des ersten Linsenbereichs (30'a) des Paares von Linsenbereichen $(30'_a, 30'_b)$ relativ zu der ebenen Grenzfläche (T) durchlaufen haben, und dritten und vierten lichtempfindlichen Sensoren (8C, 8D) zum Aufnehmen von Lichtstrahlen, die den zugewandten Abschnitt und den abgewandten Abschnitt des zweiten Linsenbereichs (30'b) des Paares von Linsenbereichen (30'a, 30'b) relativ zu der ebenen Grenzfläche (T) durchlaufen haben, gebildet ist, so daß ein Fokusfehlersignal aus der Differenz zwischen der Summe $(S_A + S_D)$ von ersten und vierten Lichterfassungssignalen von erstem und viertem lichtempfindlichen Sensor (8A, 8D) und der Summe $(S_B + S_C)$ von zweiten und dritten Lichterfassungssignalen von zweitem und drittem lichtempfindlichen Sensoren $(8_B, 8_C)$ erzeugt wird.

2. Gerät zur Fokusfehlerdetektion nach Anspruch 1, bei dem die Beziehung zwischen den Brennweiten $(f'_1, f'_2)$ des Paares von Linsenbereichen (30'a, 30'b) derart gewählt ist, daß die Bedingung

$$f'_1/f'_2 = -1$$

erfüllt ist, wobei $f'_1$ die hintere Brennweite des ersten Linsenbereichs (30'a) und $f'_2$ die hintere Brennweite des zweiten Linsenbereichs (30'b) ist.

**Revendications**

1. Appareil de détection d'erreurs de mise au point comprenant:

un objectif composite (30) formé d'une lentille unique (30α) en verre et d'une lentille unique (30β) en matière plastique; et

un photodétecteur (8) disposé derrière la lentille composite (30);

dans lequel:

la lentille en matière plastique (30β) est constituée d'une paire de régions de lentilles (30'a, 30'b) divisées par une interface plane (T) comprenant un axe optique (O) de lumière incidente sur la lentille composite (30);

ladite paire de règions de lentilles (30'a, 30'b) a des longueurs focales arrière ($f'_1$, $f'_2$) différentes l'une de l'autre et des axes optiques ($O_1$, $O_2$) séparés l'un de l'autre;

la lentille de verre (30α) est une lentille uniforme ayant son axe optique sur l'interface plane (T);

le photodétecteur (8) est placé de sorte que sa face de photodétection est positionnée à un point médian entre les points de convergence des rayons lumineux émis à partir de ladite paire de régions de lentilles (30'a, 30'b) quand cette lumière incidente sur la lentille composite (30) est à l'état de mise au point; et

le photodétecteur (8) est formé de premier et second élements de photodétection (8A, 8B) pour recevoir des rayons lumineux ayant passé par la partie périphérique et la partie plus centrale de la première région de lentille (30'a) de la paire de régions de lentilles (30'a, 30'b) par rapport à l'interface plane (T) et des troisième et quatrième éléments de photodétection (8C, 8D) pour recevoir les rayons lumineux ayant passé par la partie centrale et la partie périphérique de la seconde région de lentille (30'b) de la paire de régions de lentilles (30'a, 30'b) par rapport à l'interface plane (T) de sorte qu'un signal d'erreur de mise au points est produit à partir de la différence entre la somme ($S_A + S_D$) des premier et quatrième signaux photodétectés à partir des premier et quatrième éléments de photodétection (8A, 8D) et de la somme ($S_B + S_C$) des second et troisième signaux photodétectés à partir des second et troisième éléments de photodétection (8B, 8C).

2. Appareil de détection d'erreur de mise au point selon la revendication 1, dans lequel la relation entre les distance focales ($f'_1$, $f'_2$) de la paire de régions de lentilles (30'a, 30'b) est choisie pour satisfaire la relation:

$$f'_1/f'_2 = -1$$

où $f'_1$ est la distance focale arrière de la première région de lentille (30'a) et $f'_2$ la distance focale arrière de la seconde région de lentille (30'b).

FIG. 1

FIG. 2

FIG. 3A

FIG. 3B

FIG. 3C

# F I G. 4

# F I G 5A.   F I G. 5B

# F I G. 6

FIG. 7A

FIG. 7B

FIG. 7C

FIG. 8

Focus Error Signal

Distance

0

FIG. 9

FIG. 12

FIG. 10

FIG. 13

FIG. 11

FIG. 14

FIG. 15

FIG. 16

FIG. 17A FIG. 17B FIG. 17C

FIG. 18

## F I G. 19

Sum Signal

$S_B - S_A$

0

Distance

$S_C - S_D$

## F I G. 20

Focussing Error Signal

$(S_B + S_C) - (S_A + S_D)$

0

Distance

FIG. 21

FIG. 22

FIG. 23A   FIG. 23B   FIG. 23C

FIG. 24

## FIG. 25

$\underline{30}$

f1
30a
O1
T
O2
f2 30b

## FIG. 26

$\underline{30_2}$

f1
$30_2$a
O2
T
O1
f2 $30_2$b

## FIG. 27

$\underline{30_1}$

f1
$30_1$a
O1
T
O2
f2 $30_1$b

## FIG. 28

$\underline{30_3}$

H'
f1
$30_3$a
H1
O1
T
O2
H2'
H2'
f2 $30_3$b

## FIG. 29

$30_2$a $\underline{30_2}$

f1 O2
f2 0 O1
x
$30_2$b T

## FIG. 30

$30_4$a $\underline{30_4}$

f1 O1
0
t2 •O2
x
$30_4$b T

## FIG. 31

$30_5$a $\underline{30_5}$

f1 O1 0
t2 O2
x
$30_5$b T

## FIG. 32

$\underline{8}$

S1 R1 8A
R0 8B
S2 R2 8C
R3 8D

## FIG. 33

$\underline{8}$

S2 S1
8C 8A
8D 8B

FIG. 34

## F I G. 35

## F I G. 36